# EUROPEAN PATENT SPECIFICATION

(11) **EP 2 488 846 B1**
(45) Date of publication and mention of the grant of the patent: **28.08.2013**
(21) Application number: 10776540.6
(22) Date of filing: 12.10.2010
(51) Int. Cl.: G01M 3/28

(54) **A LEAK CONTROL SYSTEM FOR A WATER SUPPLY**
LECKSTELLENKONTROLLSYSTEM FÜR EINE WASSEREINSPEISUNG
SYSTÈME DE CONTRÔLE DES FUITES D'UNE ALIMENTATION EN EAU

(30) Priority: 13.10.2009 DK 200901116; 30.06.2010 DK 201000572
(43) Date of publication of application: 22.08.2012
(73) Proprietor: Dantaet Electronics A/S, 5250 Odense SV (DK)
(72) Inventor: GARNÆS, Svend, DK-5250 Odense 3V (DK)
(74) Representative: Larsen, Hans Ole
(86) International application number: PCT/DK2010/000133
(87) International publication number: WO 2011/044900

(56) References cited:
- WO-A1-98/23936
- WO-A1-2004/113863
- US-A1- 2005 190 066

## Description

### The prior art

The invention relates to a method and equipment for monitoring/controlling a domestic water supply for cold water and circulating hot water by means of a leak control system.

The Patent Application US 2008/0295895 discloses a system for monitoring and controlling a domestic water supply. The system is programmable and exclusively monitors the main line for the cold water supply as well as a range of consumption locations in a building. The document does not describe monitoring/control of a circulating hot water supply or recording of the total consumption of water.

The Patent Specification DK 176459 B1 discloses a system for monitoring/controlling a two line pipe installation, such as e.g. a district heating system in a dwelling. Both the supply pipe and the return pipe are monitored, and the pipe installation is shut off in both pipes in case of a break or a leak. The document does not describe a domestic water supply or recording of the total consumption of water.

The Patent Application US 2005/0190066 discloses a leak detection system in a one - stringed open pipe installation in a number of independent channels for supplying water or gas. The consumption of the media is measured over a predetermined period of time, and the value is compared to a preselected threshold value. If the value of consumption is less than the threshold value, a leak indication is produced, but no command facilities for shut valves are disclosed.

This leak detection approach cannot function in a two - stringed open pipe system with circulating hot water. It will generate false alarms due to the circulating water.

The Patent Application WO 98/23936 discloses a leak detection system in a one - stringed open installation, where the flow is recorded at all the tapping positions. The topography of this system is quite different from that of WO 2004/113863 A1 and WO 98/23936 where the flow meters are positioned by the domestic service lines. In spite of the fact that the system is capable of leak detection in an open installation it is not suitable for mounting in existing installations due to the cost.

### The object of the invention

It is the object of the invention to provide a leak control system for monitoring/controlling a domestic water supply for e.g. an apartment, where the pipelines to the apartment are branched from the main supply, as well as a leak control system for performing the method.

This object is achieved by a leak control system, which comprises at least one shutoff valve with associated flow meter arranged in a hot water supply pipe of the domestic water supply, and at least one shutoff valve with associated flow meter arranged in a hot water return pipe of the domestic water supply, and at least one shutoff valve with associated flow meter arranged in a cold water supply pipe of the domestic water supply, said shutoff valves as well as associated flow meters being connected with a control box, and wherein a computer based controls system comprises means for determining water consumption by arithmetic modules in the control system in which flow signals from the flow meter in the hot water supply pipe are transmitted to the +input on a difference module and the flow signals from the flow meter in the hot water return pipe are transmitted to the -input on the difference module, an output signal from the difference module is fed to an input on a summation module and to an input on a seepage monitor, a flow signal from the flow meter in the cold water supply pipe is fed to another input on the summation module, and an output signal of the summation module is fed to tapping counter, and wherein the difference module is adapted to correct for the measurement tolerances of the flow meters in the hot water supply and return pipes by correcting for the differences of the flow signals, by modifying a volume unit of the flow meter in the hot water supply pipe either by a fixed percentage or by means of a lookup table, whereby the difference module is adapted to gradually reduce a pre-set overcorrection.

This provides a leak control system which, based on start and execution of sequences of actions, is capable of performing a number of measurements and data collections, on the basis of which it subsequently evaluates the tightness of the shutoff valves, the tightness of the domestic water supply, the need for emission of alarms and for shutting off of the domestic water supply, as well as calculates the total consumption of water.

As disclosed in claim 2 it is expedient that if a lookup table is used, the accumulated difference of a number of measurements is used for correcting the contents of the table.

By means of the system defined in claim 3, it is ensured that the domestic water supply may be monitored and controlled currently and under conditions of operation which are expedient for the testing of the state of the domestic water supply.

When, as defined in claim 4, the control box comprises a communications gate for the connection of an external computer, it is ensured that the control system may be set up for a given domestic water supply.

The method defined in claim 5 ensures that not only the functionality of the valves may be tested, but also that their tightness may be tested under such conditions as prevent unintentional scalding of the user.

In the method defined in claim 7, the control system gives an alarm if the number of pulses from a flow meter exceeds a preselected number of pulses, so that the error is realized before e.g. a pipe break occurs.

It is ensured by the method defined in claim 8 that the tightness of the domestic water supply may be tested at least once a day, so that waste of water from defective tapping points or pipe joints is avoided.

When, according to the method of claim 9, the tightness is controlled at least once a day, such as testing on the basis of a preselected point of time whether the rest period requirement is met, an alarm may be given and the shutoff valves may optionally be closed, if the tightness requirement is not met.

When the leak control system is constructed as stated in claim 10, the system may test the functionality and tightness of the valves, without any risk of scalding, when starting and executing a given sequence of actions, just as the tightness of the domestic water supply may be controlled. It is moreover possible to calculate the total consumption of water.

It is moreover expedient, as stated in claim 10, that the shutoff valves are motor valves.

It is ensured by the method used in claim 11 that the control system gives an alarm and closes the shutoff valves, if the tapping counters exceed a given value.

It is ensured by the method used in claim 12 that the control system gives an alarm and closes the shutoff valves, if a flow meter has given no pulses for a given period of time.

It is ensured by the method used in claim 13 that the control system gives an alarm and closes the shutoff valves, if the flow meter gives no pulses in the hot water supply pipe, while the flow meter in the hot water return pipe indicates a greater flow than the initiation flow for the meter.

It is ensured by the method used in claim 14 that the flow monitor and the tapping monitors may be affected by operating a key or an external signal, so that the response of the monitors may be adapted to the presence or absence of the consumer.

Finally, it is ensured by the method used in claim 15 that the response of the flow monitor and the tapping monitor comprises accept of absence of meter pulses by lowering the alarm threshold to a given low value.

### The drawing

Exemplary embodiments of the invention will be explained more fully below with reference to the drawing, in which
- fig. 1: shows a leak control system with associated components,
- fig. 2: shows a block diagram of the control system.

### Detailed description of the invention

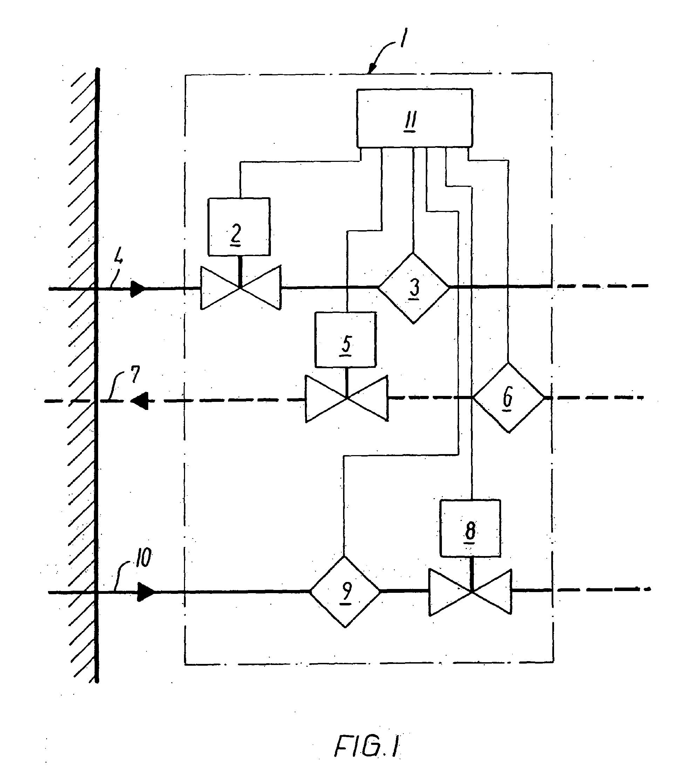

A leak control system 1 for monitoring/controlling a domestic water supply according to the invention is shown in figure 1. The leak control system comprises a shutoff valve 2 arranged in series with a pulse giving flow meter 3 in the hot water supply pipe 4 of the domestic water supply, and a shutoff valve 5 arranged in series with a pulse giving flow meter 6 in the hot water return pipe 7 of the domestic water supply, and a shutoff valve 8 arranged in series with a flow meter 9 in the supply pipe 10 of the domestic water supply.

The shutoff valves 2, 5, 8 may assume sizes from ½" to 2" and are equipped with 24 Vac motors. The system is capable of handling flow meters 3, 6, 9 with meter sizes from ½" to 2".

The shutoff valves 2, 5, 8 as well as the flow meters 3, 6, 9 are connected with a control box 11, which comprises a computer based control system 18 as well as a plurality of components (not shown), such as e.g. a front plate with flow indicators in the form of light emitting diodes with the colours, green, red and yellow, as well as four pushbuttons for the selection of holiday consumption, unrestricted consumption, manual control of valves or reset. In addition, the control box comprises a serial communications gate.

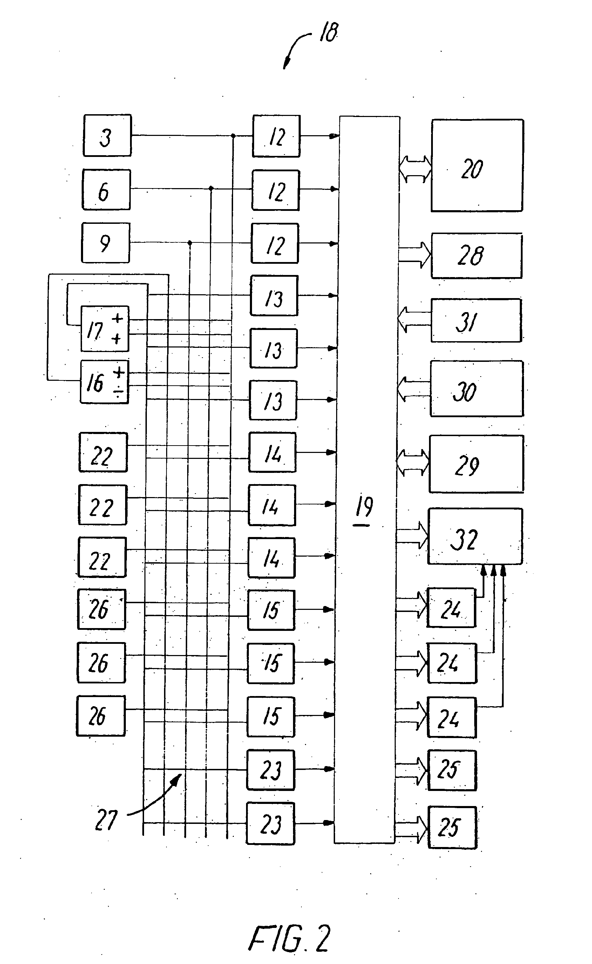

The control system 18 shown in fig. 2 is based on a resident monitor 20 in an embedded system program, said resident monitor being connected via a system bus 19 with a plurality of monitors 12, 13, 14, 15 and 23, which are connected via a cross field 27 with flow meters 3, 6, 9, a summation module 17 and a difference module 16, as well as diode drivers 22 and pulse repetition drivers 26. Moreover, connection is provided via the system bus with a plurality of controlled outputs 24, 25, a data logger 28 as well as input modules 29, 30, 31 for pushbutton operation, digital inputs and external sensors, respectively.

The resident monitor 20 contains the system program for the leak control system 1, and the control system 18 is set up for the task by means of an external computer. The basic system type with associated signal transmission is defined by the external computer, i.e. connections are provided in the cross field 27 - partly by means of program instructions, partly by means of jumpers - of flow signals/inputs, elementary signal descriptions are preselected, and basic parameter settings are carried out for all meters, modules and monitoring operations.

The signals from each of the flow meters 3, 6, 9 are transmitted directly to their respective monitors 12 or further on via the cross field to other monitors 13, 14, 15, 23, arithmetic modules 16, 17, indicators 22 and/or pulse repetition drivers 26 depending on the selected basic system type.

The monitors 12 record and communicate the flow signals to the system bus, from which they are transmitted to the resident monitor 20. The flow signals appear as direct unprocessed pulse signals.

The monitors 13 are seepage monitors which, during the execution of a given sequence of actions, record and communicate the flow signals from the flow meters during a selected period of time, in which it may be expected that the domestic water supply is at rest. The rest period may have a duration of from 1000 sec to 3600 sec. Such a measurement is made at least once a day. In the rest period, the seepage amount may not exceed from 2 to 8 litres. If the seepage amount does not get below the selected amount at least once a day, an alarm is given and the installation is shut off.

The monitors 14 are tapping counters which record the consumption of hot water and/or cold water during a single tapping. Max. tapping amount per tapping may be selected from 125 litres to 1000 litres. If the selected maximum amount is exceeded, it is considered a pipe break, and an alarm is given, and the installation is shut off.

In the event that a larger tapping amount than the selected limit value is needed, the function may be disabled by a pushbutton command from the front plate. The period of free tapping is selected to be one hour as a standard, but another time period may be entered, if desired.

The monitors 15 are valve monitors, which record and communicate flow signals from the flow meters associated with the valves, said valves being monitored during the execution of a given sequence of actions. A close command makes the valves 2, 5, 8 close via the valve relays 24, and the flow through the valves is recorded after a transit time. The transit time is 30 sec as a standard, but another value may be set.

An incorporated tightness control module 32 with a time lag of e.g. 2 sec may be mounted, so that the hot water valves 2, 5 close before the cold water valve 8, and so that the cold water valve opens 2 sec earlier than the hot water valves. This lag minimizes the risk of scalding, if a user opens a mixer tap.

After the valves have been closed, the flow through the valves is recorded during a tightness measurement period of time. The time period may be preselected to e.g. 40 sec, but it may be set to another value. If the number of pulses recorded during the measurement period of time exceeds the standard level 3, the valve is deemed to be leaky, and an alarm is given. The pulse level may be set to another value.

After completed control of the valves, these are opened again, and the system changes to normal state.

The monitors 23 are idle, but may be coupled to other meters in special cases.

Thus, the rest period is used for controlling the tightness in the system on the basis of arriving pulses during the period. In case of fulfilled control, the states will remain unchanged, until a new control may show that the tightness requirement is not satisfied.

The arithmetic modules comprise a difference module 16 and a summation module 17. The modules are used for current calculation of the hot water consumption as well as the cold water consumption and the total water consumption. The flow signals from the hot water supply pipe and the hot water return pipe are transmitted to the +input and the -input, respectively, on the difference module 16. The signal difference (the consumption of hot water) is fed to the one input on the summation module 17 and the input on the monitor 13. The flow signal from the cold water supply pipe is fed to the other input on the summation module, and the output signal (the total consumption) is fed to the input on the monitor 14. The calculated values may now be fed to the resident monitor 20 or the data logger 28 via the system bus.

Further, the difference module is capable of correcting for the measurement tolerances of the flow meters. In the event that no hot water is tapped, the flow meters should give the same values in principle, i.e. indicate the same flow, and thereby the output of the difference module should ideally show zero.

To correct for the differences of the flow signals, the volume units of the one meter are corrected.

It is assumed that the (+) meter runs a percentage faster than the (-) meter, and the volume unit of the (+) meter is modified, either by a fixed percentage or by means of a lookup table.

If the lookup table is used, the difference will be negative initially, but after a number of measurements the accumulated difference is used for correcting the contents of the table toward values which better reflect the true relationship between the readings of the meters.

Thus, the pre-set overcorrection of the volume units used is gradually reduced over time, until the meter reading is optimal.

All the meters 3, 6, 9 are monitored permanently, as the idle time of the meters, i.e. the time where no meter activity takes place, is recorded. If the recorded idle time exceeds the set maximum idle time, an alarm is given, and the installation is shut off so that the meter may be serviced.

In addition, the control system monitors the mains supply and all internal voltage supplies. If these fail, an alarm is given.

The modules 22 comprise the drivers for the signal diodes arranged on the front plate. The signal diodes are associated with their respective signal sources. The diodes are used in a setup as indicators for the flow through the flow meters. The diode colours are green, yellow and red.

The diode driver may be set up with a selected flash frequency by entering a scale factor, which determines whether the module uses direct or metric flow pulses, and whether these are to be scaled or not.

If zero is set as a scale factor, direct, unscaled pulses are used, i.e. a visible flash per pulse from the source.

If a positive scale factor n is set, metric pulses are used (normally 1/litre), and a visible flash is given for each n pulses from the source.

If a negative scale factor -n is set, direct pulses are used, and a visible flash is given for each n pulses from the source.

The possibility of reducing the flash frequency is useful in case of high flows, as flash frequencies above 10 Hz are not very readable.

The flash length may be set, too, so that the on/off relationship may be used for compensating differences in brightness.

The modules 26 are pulse repetition drivers, which may be associated with their respective signal sources.

The drivers may be set up for scaling the signals from a signal source. The signals are scaled by entering a scale factor.

If zero is set as a scale factor, a pulse is given on the output for each direct source pulse.

If a positive scale factor n is set, a metric pulse is given on the output for each n metric pulses from the source (normally 1 pulse/litre).

In addition, the control system comprises a real time clock (RTC) for executing planned actions, such as testing of tightness in the rest period, or testing of the tightness of the valves or valve motion. Moreover, all events which are fed to a data logger 28 are time-stamped.

The system may be coupled to two liquid sensors via an interface ILS-C (31), which liquid sensors may be arranged on particularly sensitive areas, so that the system may shutoff the installation and give an alarm if moisture is registered.

## Claims

1. A leak control system for a domestic water supply with cold water and circulating hot water by means of a leak control system, **characterized in that** it comprises at least one shutoff valve (2) with associated flow meter (3) arranged in a hot water supply pipe (4) of the domestic water supply, and at least one shutoff valve (5) with associated flow meter (6) arranged in a hot water return pipe (7) of the domestic water supply, and at least one shutoff valve (8) with associated flow meter (9) arranged in a cold water supply pipe (10) of the domestic water supply, said shutoff valves (2, 5, 8) as well as associated flow meters (3, 6, 9) being connected with a control box (11) and wherein a computer based controls system comprises means for determining water consumption by arithmetic modules in the control system in which
flow signals from the flow meter (3) in the hot water supply pipe (4) are transmitted to the +input on a difference module (16) and the flow signals from the flow meter (6) in the hot water return pipe (7) are transmitted to the -input on the difference module (16),
an output signal from the difference module (16) is fed to an input on a summation module (17) and to an input on a seepage monitor (13),
a flow signal from the flow meter (8) in the cold water supply pipe (10) is fed to another input on the summation module (17), and
an output signal of the summation module is fed to a tapping counter (14), and
wherein the difference module (16) is adapted to correct for the measurement tolerances of the flow meters (3, 6) in the hot water supply and return pipes (4, 7) by correcting for the differences of the flow signals, by correcting a volume unit of the flow meter (3) in the hot water supply pipe either by a fixed percentage or by means of a lookup table, whereby the difference module is adapted to gradually reduce a pre-set overcorrection.

2. A leak control system according to claim 1, **characterized in that** if a lookup table is used, the accumulated difference of a number of measurements is used for correcting the contents of the table.

3. A leak control system according to claim 1 or 2, **characterized in that** the system is
a) a computer based control system (18), which comprises
b) at least one flow meter monitor (12) connected with each flow meter (3, 6, 9) for monitoring/recording pulse signals of the individual flow meter (3,6,9),
c) at least one seepage monitor (13) connected with each flow meter (3, 6, 9) for monitoring/recording a possibly seeping water amount,
d) the tapping counter(s) (14) connected with each flow meter (3, 6, 9) for monitoring/recording a possible tapping amount,
e) the difference module (16) and the summation module (17) are adapted to receive pulse signals from the flow meters (3, 6, 9), for calculating total consumption of water,
f) at least one valve monitor (15) connected with each shutoff valve (2, 5, 8) for monitoring/recording the possible state of the individual valve: open or closed tight or leaky, as well as
g) a sequencer, which is started by the control system (18) of the control box, and which - in consideration of the conditions of operations of the domestic water supply - carries out a given sequence of actions, during which it controls/monitors the valve monitors (15), the seepage monitors (13), the tapping counters (14) and the flow meter monitors (12).

4. A leak control system according to claim 1, **characterized in that** the control box (11) moreover comprises a communications gate for connecting an external computer for setting up the control system (18) for a given domestic water supply.

5. A method of carrying out the leak control in a system according to any of the claims 1 - 4, which on the basis of start and execution of sequences of actions, the system (1) performs a number of measurements and data collections, on the basis of which it subsequently evaluates the tightness and functionality of the shutoff valves, the tightness of the domestic water supply, the need for giving alarms and for shutting off the domestic water supply, as well as calculates the total consumption of water, **characterized in that** the total consumption of water is determined currently during the execution of a given sequence of actions wherein
the flow signals from the flow meter (3) in the hot water supply pipe (4) and the flow meter (6) in the hot water return pipe (7) are fed to the inputs (+,-) of the difference module (16), respectively,
the signal from the output of the difference module is fed to the input on a seepage monitor (13) and an input on the summation module (17), and the signal from the flow meter (9) in the cold water supply pipe (10) is fed to an input on the summation module, and
the signal from the output of the summation module is fed to a tapping counter (14), and
wherein the difference module is capable of correcting for measurement tolerances of the flow meters (3, 6) in the hot water supply and return pipes (4, 7) by correcting for differences of the flow signals by correcting the volume unit of the flow meter (3) in the hot water supply pipe (4) either by a fixed percentage or by means of a lookup table, whereby a pre-set overcorrection is gradually reduced over time.

6. A method according to claim 5, **characterized in that** a when lookup table is used, the accumulated difference of a number of measurements is used for correcting the contents of the table.

7. A method according to claim 5 or 6, **characterized in that** the tightness and functionality of the shutoff valves is determined during the execution of the given sequence of actions **in that**
a) the sequencer applies a close command for the shutoff valve (2) in the hot water supply pipe (4) and for the shutoff valve (5) in the hot water return pipe (7), and starts the transit time of the valves,
b) the sequencer starts a safety time lag,
c) the sequencer applies a close command for the shutoff valve (8) in the cold water supply pipe (10) after the expiry of the safety time lag and starts the transit time of the valve,
d) after the expiry of the transit time for all valves, the sequencer starts a preselected tightness measurement time, during which time all valves are kept closed, and flow signals, such as pulses, if any, from the associated flow meters (3, 6, 9) are recorded by the valve monitors (15),
e) after the expiry of the tightness measurement time, the sequencer removes the close command for the shutoff valve (8) in the cold water supply pipe (10) and starts the safety time lag, and
f) after the expiry of the safety time lag, the sequencer removes the close command for the shutoff valve (2) in the hot water supply pipe (4) and for the shutoff valve (5) in the hot water return pipe (7), deactivates itself and changes to a normal monitoring state.

8. A method according to any of the claims 5-7, **characterized in that** the control system (18) gives an alarm, if the number of flow signals, such as pulses, from the flow meter (3, 6, 9) exceeds a preselected number of pulses, while the associated valve is closed.

9. A method according to claim 5, **characterized in that** the tightness of the domestic water system is determined at least once a day during the execution of a given sequence of actions.

10. A method according to claim 9, **characterized in that** the control system (18) gives an alarm and closes the shutoff valves (2, 5, 8), if the number of recorded pulses exceeds a preselected limit value during the preselected rest period.

11. A method according to claim 5, **characterized in that** the control system (18) gives an alarm and closes the shutoff vales (2, 5, 8), if the tapping counter (14) exceeds a given value.

12. A method according to claim 5, **characterized in that** the control system (18) gives an alarm and closes the shutoff valves (2, 5, 8), if a flow meter (3, 6, 9) has given no pulses for a given period of time.

13. A method according to claim 12, **characterized in that** the control system (18) gives an alarm and closes the shutoff valves (2, 5, 8), if the flow meter (3) in the hot water supply pipe gives no pulses, while the flow meter (6) in the hot water return pipe indicates a greater flow than the initiation flow for the meter (3).

14. A method according to claims 13, **characterized in that** the flow monitor (12) and the tapping monitors (14) is affected by the operation of a key or an external signal, so that the response of the monitors (12, 14) is adapted to the presence or absence of the consumer.

15. A method according to claim 14, **characterized in that** the response of the flow monitor (12) and the tapping monitor (14) comprises acknowledgement of absence of meter pulses by lowering the alarm threshold to a given low value.

## Patentansprüche

1. Leckstellenkontrollsystem für eine häusliche Wasserversorgung mit Kaltwasser und zirkulierendem Warmwasser mittels eines Leckstellenkontrollsystems, **dadurch gekennzeichnet, dass** es mindestens ein Absperrventil (2) mit zugehörigem Flussmessgerät (3), das in einem Warmwasserversorgungsrohr (4) der häuslichen Wasserversorgung angeordnet ist, und mindestens ein Absperrventil (5) mit zugehörigem Flussmessgerät (6), das in einem Warmwasserrücklaufrohr (7) der häuslichen Wasserversorgung angeordnet ist, und mindestens ein Absperrventil (8) mit zugehörigem Flussmessgerät (9), das in einem Kaltwasserversorgungsrohr (10) der häuslichen Wasserversorgung angeordnet ist, umfasst, wobei die Absperrventile (2, 5, 8) sowie die zugehörigen Flussmessgeräte (3, 6, 9) mit einer Steuerbox (11) verbunden sind und wobei ein computerbasiertes Kontrollsystem Mittel zum Bestimmen des Wasserverbrauchs durch arithmetische Module in dem Kontrollsystem umfasst, in dem
Flusssignale von dem Flussmessgerät (3) in dem Warmwasserversorgungsrohr (4) an den +Eingang an einem Differenzmodul (16) übertragen werden und die Flusssignale von dem Flussmessgerät (6) in dem Warmwasserrücklaufrohr (7) an den -Eingang an dem Differenzmodul (16) übertragen werden,
ein Ausgangssignal von dem Differenzmodul (16) einem Eingang an einem Summierungsmodul (17) und einem Eingang an einem Aussickerüberwachungsgerät (13) zugeführt wird,
ein Flusssignal von dem Flussmessgerät (8) in dem Kaltwasserversorgungsrohr (10) einem anderen Eingang an dem Summierungsmodul (17) zugeführt wird, und
ein Ausgangssignal des Summierungsmoduls einem Auslaufzähler (14) zugeführt wird, und
wobei das Differenzmodul (16) eingerichtet ist, um Messtoleranzen der Flussmessgerät (3, 6) in der Warmwasserversorgung und den Rücklaufrohren (4, 7) zu korrigieren, indem Differenzen der Flusssignale korrigiert werden, indem eine Volumeneinheit des Flussmessgeräts (3) in dem Warmwasserversorgungsrohr entweder um einen festen Prozentsatz oder mittels einer Nachschlagtabelle korrigiert wird, wodurch das Differenzmodul eingerichtet ist, um eine voreingestellte Überkorrektur allmählich zu verringern.

2. Leckstellenkontrollsystem nach Anspruch 1, **dadurch gekennzeichnet, dass**, wenn eine Nachschlagtabelle verwendet wird, die akkumulierte Differenz einer Anzahl von Messungen verwendet wird, um die Inhalte der Tabelle zu korrigieren.

3. Leckstellenkontrollsystem nach Anspruch 1 oder 2, **dadurch gekennzeichnet, dass** das System
a) ein computerbasiertes Kontrollsystem (18) ist, das umfasst
b) mindestens ein Flussmessgerätüberwachungsgerät (12), das mit jedem Flussmessgerät (3, 6, 9) verbunden ist, um Pulssignale des individuellen Flussmessgeräts (3, 6, 9) zu überwachen/aufzuzeichnen,
c) mindestens ein Aussickerüberwachungsgerät (13), das mit jedem Flussmessgerät (3, 6, 9) verbunden ist, um eine möglicherweise aussickernde Wassermenge zu überwachen/aufzuzeichnen,
d) den/die mit jedem Flussmessgerät (3, 6, 9) verbundenen Auslaufzähler (14) zum Überwachen/Aufzeichnen einer möglichen Auslaufmenge,
e) das Differenzmodul (16) und das Summierungsmodul (17), die eingerichtet sind, um Pulssignale von den Flussmessgeräten (3, 6, 9) zu empfangen, um den Gesamtverbrauch von Wasser zu berechnen,
f) mindestens ein Ventilüberwachungsgerät (15), das mit jedem Absperrventil (2, 5, 8) verbunden ist, um den möglichen Zustand des individuellen Ventils: offen oder fest geschlossen oder leckend zu überwachen/aufzuzeichnen, sowie
g) eine Ablaufsteuerung, die von dem Kontrollsystem (18) der Steuerbox gestartet wird und die - unter Berücksichtigung der Betriebsbedingungen der häuslichen Wasserversorgung - eine gegebene Abfolge von Aktionen ausführt, während derer sie die Ventilüberwachungsgeräte (15), die Aussickerüberwachungsgeräte (13), die Auslaufzähler (14) und die Flussmessgerätüberwachungsgeräte (12) kontrolliert/überwacht.

4. Leckstellenkontrollsytem nach Anspruch 1, **dadurch gekennzeichnet, dass** die Steuerbox (11) darüber hinaus ein Kommunikationsgate zum Verbinden eines externen Computers zum Einrichten des Kontrollsystems (18) für eine gegebene häusliche Wasserversorgung umfasst.

5. Verfahren zum Ausführen der Leckstellenkontrolle in einem System gemäß einem der Ansprüche 1 - 4, wobei das System (1) auf Basis von Beginn und Durchführung von Aktionsabfolgen eine Anzahl Messungen und Datensammlungen durchgeführt, auf Basis derer es anschließend die Dichtigkeit und Funktionalität der Absperrventile, die Dichtigkeit der häuslichen Wasserversorgung, das Erfordernis zum Geben von Alarm und zum Absperren der häuslichen Wasserversorgung bewertet sowie den Gesamtverbrauch von Wasser berechnet, **dadurch gekennzeichnet, dass** der Gesamtverbrauch von Wasser während der Ausführung einer gegebenen Aktionsabfolge fortlaufend bestimmt wird, wobei
die Flusssignale von dem Flussmessgerät (3) in dem Warmwasserversorgungsrohr (4) und dem Flussmessgerät (6) in dem Warmwasserrücklaufrohr (7) den Eingängen (+ bzw. -) des Differenzmoduls (16) zugeführt werden,
das Signal von dem Ausgang des Differenzmoduls dem Eingang an einem Aussickerüberwachungsgerät (13) und einem Eingang an dem Summierungsmodul (17) zugeführt wird und das Signal von dem Flussmessgerät (9) in dem Kaltwasserversorgungsrohr (10) einem Eingang an dem Summierungsmodul zugeführt wird, und
das Signal von dem Ausgang des Summierungsmoduls einem Auslaufzähler (14) zugeführt wird, und
wobei das Differenzmodul in der Lage ist, Messtoleranzen der Flussmessgeräte (3, 6) in der Warmwasserversorgung und den Rücklaufrohren (4, 7) zu korrigieren, indem Differenzen der Flusssignale korrigiert werden, indem die Volumeneinheit des Flussmessgeräts (3) in dem Warmwasserversorgungsrohr (4) entweder um einen festen Prozentsatz oder mittels einer Nachschlagtabelle korrigiert wird, wodurch eine voreingestellte Überkorrektur mit der Zeit allmählich verringert wird.

6. Verfahren nach Anspruch 5, **dadurch gekennzeichnet, dass**, wenn eine Nachschlagtabelle verwendet wird, die akkumulierte Differenz einer Anzahl von Messungen verwendet wird, um die Inhalte der Tabelle zu korrigieren.

7. Verfahren nach Anspruch 5 oder 6, **dadurch gekennzeichnet, dass** die Dichtigkeit und Funktionalität der Absperrventile während der Ausführung der gegebenen Abfolge von Aktionen dadurch bestimmt wird, dass
a) die Ablaufsteuerung einen Schließbefehl für das Absperrventil (2) in dem Warmwasserversorgungsrohr (4) und für das Absperrventil (5) in dem Warmwasserrücklaufrohr (7) anwendet und die Übergangszeit der Ventile startet,
b) die Ablaufsteuerung eine Sicherheitszeitverzögerung startet,
c) die Ablaufsteuerung nach dem Ablauf der Sicherheitszeitverzögerung einen Schließbefehl für das Absperrventil (8) in dem Kaltwasserversorgungsrohr (10) anwendet und die Übergangszeit des Ventils startet,
d) die Ablaufsteuerung nach dem Ablauf der Übergangszeit für alle Ventile eine vorausgewählte Dichtigkeitsmessungszeit startet, während der alle Ventile geschlossen gehalten werden und Flusssignale wie z.B. Pulse, sofern es welche gibt, von den zugehörigen Flussmessgeräten (3, 6, 9) von den Ventilüberwachungsgeräten (15) aufgezeichnet werden,
e) die Ablaufsteuerung nach dem Ablauf der Dichtigkeitsmessungszeit den Schließbefehl für das Absperrventil (8) in dem Kaltwasserversorgungsrohr (10) entfernt und die Sicherheitszeitverzögerung startet, und
f) die Ablaufsteuerung nach dem Ablauf der Sicherheitszeitverzögerung den Schließbefehl für das Absperrventil (2) in dem Warmwasserversorgungsrohr (4) und für das Absperrventil (5) in dem Warmwasserrücklaufrohr (7) entfernt, sich selbst deaktiviert und in einen normalen Überwachungszustand wechselt.

8. Verfahren nach einem der Ansprüche 5-7, **dadurch gekennzeichnet, dass** das Kontrollsystem (18) einen Alarm gibt, wenn die Anzahl der Flusssignale, wie z.B. Pulse, von dem Flussmessgerät (3, 6, 9) eine vorausgewählte Anzahl von Pulsen überschreitet, während das zugehörige Ventil geschlossen ist.

9. Verfahren nach Anspruch 5, **dadurch gekennzeichnet, dass** die Dichtigkeit des häuslichen Wassersystems mindestens einmal am Tag während der Ausführung einer gegebenen Aktionsabfolge bestimmt wird.

10. Verfahren nach Anspruch 9, **dadurch gekennzeichnet, dass** das Kontrollsystem (18) einen Alarm gibt und die Absperrventile (2, 5, 8) schließt, wenn die Anzahl von aufgezeichneten Pulsen während der vorausgewählten Ruheperiode einen vorausgewählten Grenzwert überschreitet.

11. Verfahren nach Anspruch 5, **dadurch gekennzeichnet, dass** das Kontrollsystem (18) einen Alarm gibt und die Absperrventile (2, 5, 8) schließt, wenn der Auslaufzähler (14) einen gegebenen Wert überschreitet.

12. Verfahren nach Anspruch 5, **dadurch gekennzeichnet, dass** das Kontrollsystem (18) einen Alarm gibt und die Absperrventile (2, 5, 8) schließt, wenn ein Flussmessgerät (3, 6, 9) für eine bestimmte Zeitdauer keine Pulse gegeben hat.

13. Verfahren nach Anspruch 12, **dadurch gekennzeichnet, dass** das Kontrollsystem (18) einen Alarm gibt und die Absperrventile (2, 5, 8) schließt, wenn das Flussmessgerät (3) im dem Warmwasserversorgungsrohr keine Pulse gibt, während das Flussmessgerät (6) in dem Warmwasserrücklaufrohr einen größeren Fluss als den Inbetriebnahmefluss für das Messgerät (3) angibt.

14. Verfahren nach Anspruch 13, **dadurch gekennzeichnet, dass** das Flussüberwachungsgerät (12) und die Auslaufüberwachungsgeräte (14) von der Betätigung einer Taste oder eines externen Signals beeinflusst werden, so dass die Reaktion der Überwachungsgeräte (12, 14) an die Anwesenheit oder Abwesenheit des Verbrauchers angepasst wird.

15. Verfahren nach Anspruch 14, **dadurch gekennzeichnet, dass** die Reaktion des Flussüberwachungsgeräts (12) und des Auslaufüberwachungsgeräts (14) eine Bestätigung der Abwesenheit von Messgerätpulsen umfasst, indem die Alarmschwelle auf einen gegebenen niedrigen Wert abgesenkt wird.

## Revendications

1. Système de contrôle de fuites pour une alimentation en eau domestique avec de l'eau froide et de l'eau chaude en circulation au moyen d'un système de contrôle de fuites, **caractérisé en ce qu'**il comprend au moins une vanne d'arrêt (2) avec un débitmètre associé (3) agencé dans un tuyau d'alimentation en eau chaude (4) de l'alimentation en eau domestique, et au moins une vanne d'arrêt (5) avec un débitmètre associé (6) agencé dans un tuyau de retour d'eau chaude (7) de l'alimentation en eau domestique, et au moins une vanne d'arrêt (8) avec un débitmètre associé (9) agencé dans un tuyau d'alimentation en eau froide (10) de l'alimentation en eau domestique, lesdites vannes d'arrêt (2, 5, 8) ainsi que les débitmètres associés (3, 6, 9) étant reliés à un boîtier de commande (11) et dans lequel un système de contrôle par ordinateur comprend des moyens pour déterminer une consommation d'eau par des modules arithmétiques dans le système de contrôle dans lequel
des signaux de débit provenant du débitmètre (3) dans le tuyau d'alimentation en eau chaude (4) sont transmis à l'entrée + sur un module de différence (16) et les signaux de débit provenant du débitmètre (6) dans le tuyau de retour d'eau chaude (7) sont transmis à l'entrée - sur le module de différence (16),
un signal de sortie du module de différence (16) est appliqué à une entrée sur un module de sommation (17) et à une entrée sur un moniteur de suintement (13),
un signal de débit provenant du débitmètre (8) dans le tuyau d'alimentation en eau froide (10) est appliqué à une autre entrée sur le module de sommation (17), et
un signal de sortie du module de sommation est appliqué à un compteur de soutirage (14), et
dans lequel le module de différence (16) est adapté pour corriger les tolérances de mesure des débitmètres (3, 6) dans le tuyau d'alimentation en eau chaude et le tuyau de retour d'eau chaude (4, 7) en corrigeant les différences des signaux de débit, en corrigeant une unité de volume du débitmètre (3) dans le tuyau d'alimentation en eau chaude soit par un pourcentage fixe soit au moyen d'une table de consultation, ce par quoi le module de différence est adapté pour réduire graduellement une correction excessive pré-établie.

2. Système de contrôle de fuites selon la revendication 1, **caractérisé en ce que** si une table de consultation est utilisée, la différence cumulée de plusieurs mesures est utilisée pour corriger le contenu de la table.

3. Système de contrôle de fuites selon la revendication 1 ou 2, **caractérisé en ce que** le système est
a) un système de contrôle par ordinateur (18), qui comprend
b) au moins un moniteur de débitmètre (12) relié à chaque débitmètre (3, 6, 9) pour surveiller/enregistrer des signaux d'impulsion du débitmètre individuel (3, 6, 9),
c) au moins un moniteur de suintement (13) relié à chaque débitmètre (3, 6, 9) pour surveiller/enregistrer une quantité d'eau éventuellement suintante,
d) le(s) compteur(s) de soutirage (14) relié(s) à chaque débitmètre (3, 6, 9) pour surveiller/enregistrer une quantité de soutirage possible,
e) le module de différence (16) et le module de sommation (17) sont adaptés pour recevoir des signaux d'impulsion provenant des débitmètres (3, 6, 9), pour calculer une consommation totale d'eau,
f) au moins un moniteur de vanne (15) relié à chaque vanne d'arrêt (2, 5, 8) pour surveiller/enregistrer l'état possible de la vanne individuelle : ouverte ou fermée et étanche ou présentant une fuite, ainsi que
g) un séquenceur qui est démarré par le système de contrôle (18) du boîtier de commande et qui - compte tenu des conditions de fonctionnement de l'alimentation en eau domestique - exécute une séquence d'actions donnée pendant laquelle il contrôle/surveille les moniteurs de vanne (15), les moniteurs de suintement (13), les compteurs de soutirage (14) et les moniteurs de débitmètre (12).

4. Système de contrôle de fuites selon la revendication 1, **caractérisé en ce que** le boîtier de commande (11) comprend en outre une porte de communication pour une connexion à un ordinateur externe pour paramétrer le sys-tème de contrôle (18) pour une alimentation en eau domestique donnée.

5. Procédé de mise en oeuvre du contrôle de fuites dans un système selon l'une quelconque des revendications 1 à 4, dans lequel, sur la base du lancement et de l'exécution de séquences d'actions, le système (1) réalise plusieurs mesures et collectes de données sur les bases desquelles il évalue ensuite l'étanchéité et la fonctionnalité des vannes d'arrêt, l'étanchéité de l'alimentation en eau domestique, la nécessité de délivrer des alarmes et de couper l'alimentation en eau domestique, et calcule la consommation totale d'eau, **caractérisé en ce que** la consommation totale d'eau est déterminée actuellement pendant l'exécution d'une séquence d'actions donnée, dans lequel
les signaux de débit provenant du débitmètre (3) dans le tuyau d'alimentation en eau chaude (4) et du débitmètre (6) dans le tuyau de retour d'eau chaude (7) sont appliqués aux entrées (+, -) du module de différence (16), respectivement,
le signal provenant de la sortie du module de différence est appliqué à l'entrée sur un moniteur de suintement (13) et une entrée sur le module de sommation (17), et le signal provenant du débitmètre (9) dans le tuyau d'alimentation en eau froide (10) est appliqué à une entrée sur le module de sommation, et
le signal provenant de la sortie du module de sommation est appliqué à un compteur de soutirage (14), et
dans lequel le module de différence est capable de corriger des tolérances de mesure des débitmètres (3, 6) dans les tuyaux d'alimentation en eau chaude et de retour d'eau chaude (4, 7) en corrigeant des différences des signaux de débit en corrigeant l'unité de volume du débitmètre (3) dans le tuyau d'alimentation en eau chaude (4) soit par un pourcentage fixe soit au moyen d'une table de consultation, ce par quoi une correction excessive pré-établie est graduellement réduite en fonction du temps.

6. Procédé selon la revendication 5, **caractérisé en ce que** lorsqu'une table de consultation est utilisée, la différence cumulée de plusieurs mesures est utilisée pour corriger le contenu de la table.

7. Procédé selon la revendication 5 ou 6, **caractérisé en ce que** l'étanchéité et la fonctionnalité des vannes d'arrêt sont déterminées pendant l'exécution de la séquence d'actions donnée, **en ce que**
a) le séquenceur applique une commande de fermeture pour la vanne d'arrêt (2) dans le tuyau d'alimentation en eau chaude (4) et pour la vanne d'arrêt (5) dans le tuyau de retour d'eau chaude (7), et démarre le temps de transit des vannes,
b) le séquenceur démarre un laps de temps de sécurité,
c) le séquenceur applique une commande de fermeture pour la vanne d'arrêt (8) dans le tuyau d'alimentation en eau froide (10) après l'expiration du laps de temps de sécurité et démarre le temps de transit de la vanne,
d) après l'expiration du temps de transit pour toutes les vannes, le séquenceur démarre un temps de mesure d'étanchéité présélectionné, temps pendant lequel toutes les vannes sont maintenues fermées, et des signaux de débit, tels que des impulsions, le cas échéant, provenant des débitmètres associés (3, 6, 9) sont enregistrés par les moniteurs de vanne (15),
e) après l'expiration du temps de mesure d'étanchéité, le séquenceur supprime la commande de fermeture pour la vanne d'arrêt (8) dans le tuyau d'alimentation en eau froide (10) et démarre le laps de temps de sécurité, et
f) après l'expiration du laps de temps de sécurité, le séquenceur supprime la commande de fermeture pour la vanne d'arrêt (2) dans le tuyau d'alimentation en eau chaude (4) et pour la vanne d'arrêt (5) dans le tuyau de retour d'eau chaude (7) se désactive et passe à un état de surveillance normal.

8. Procédé selon l'une quelconque des revendications 5 à 7, **caractérisé en ce que** le système de contrôle (18) délivre une alarme si le nombre de signaux de débit, tels que des impulsions, provenant du débitmètre (3, 6, 9) dépasse un nombre présélectionné d'impulsions lorsque la vanne associée est fermée.

9. Procédé selon la revendication 5, **caractérisé en ce que** l'étanchéité du système d'eau domestique est déterminée au moins une fois par jour pendant l'exécution d'une séquence d'actions donnée.

10. Procédé selon la revendication 9, **caractérisé en ce que** le système de commande (18) délivre une alarme et ferme les vannes d'arrêt (2, 5, 8) si le nombre d'impulsions enregistrées dépasse une valeur limite présélectionnée pendant la période de repos présélectionnée.

11. Procédé selon la revendication 5, **caractérisé en ce que** le système de contrôle (18) délivre une alarme et ferme les vannes d'arrêt (2, 5, 8) si le compteur de soutirage (14) dépasse une valeur donnée.

12. Procédé selon la revendication 5, **caractérisé en ce que** le système de contrôle (18) délivre une alarme et ferme les vannes d'arrêt (2, 5, 8) si un débitmètre (3, 6, 9) n'a délivré aucune impulsion pendant une période de temps donnée.

13. Procédé selon la revendication 12, **caractérisé en ce que** le système de contrôle (18) délivre une alarme et ferme les vannes d'arrêt (2, 5, 8) si le débitmètre (3) dans le tuyau d'alimentation en eau chaude ne délivre aucune impulsion lorsque le débitmètre (6) dans le tuyau de retour d'eau chaude indique un débit supérieur au débit d'initiation pour le débitmètre (3).

14. Procédé selon la revendication 13, **caractérise en ce que** le moniteur de débit (12) et les moniteurs de soutirage (14) sont affectés par l'actionnement d'une clef ou un signal externe, de sorte que la réponse des moniteurs (12, 14) soit adaptée à la présence ou l'absence du consommateur.

15. Procédé selon la revendication 14, **caractérisé en ce que** la réponse du moniteur de débit (12) et du moniteur de soutirage (14) comprend l'acquittement de l'absence d'impulsions de mesureur en abaissant le seuil d'alarme à une valeur basse donnée.
